(19) **Europäisches Patentamt / European Patent Office / Office européen des brevets**

(11) **EP 4 730 436 A1**

(12) **EUROPEAN PATENT APPLICATION**
published in accordance with Art. 153(4) EPC

(43) Date of publication:
**22.04.2026 Bulletin 2026/17**

(21) Application number: **24891660.3**

(22) Date of filing: **17.10.2024**

(51) International Patent Classification (IPC):
**H01M 4/583** (2010.01)   **H01M 4/36** (2006.01)
**H01M 4/48** (2010.01)   **H01M 4/133** (2010.01)
**H01M 10/0525** (2010.01)   **H01M 4/1393** (2010.01)
**H01M 4/02** (2006.01)

(52) Cooperative Patent Classification (CPC):
**H01M 4/02; H01M 4/133; H01M 4/1393;
H01M 4/36; H01M 4/48; H01M 4/583;
H01M 10/0525;** Y02E 60/10

(86) International application number:
**PCT/KR2024/015715**

(87) International publication number:
**WO 2025/105713 (22.05.2025 Gazette 2025/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.11.2023 KR 20230158202**

(71) Applicant: **LG Energy Solution, Ltd.
Seoul 07335 (KR)**

(72) Inventors:
• **MIN, Jiwon**
  **Daejeon 34122 (KR)**
• **KWON, Yohan**
  **Daejeon 34122 (KR)**
• **MIN, Kyeongjun**
  **Daejeon 34122 (KR)**
• **PARK, Seungwon**
  **Daejeon 34122 (KR)**
• **PARK, Junhyoung**
  **Daejeon 34122 (KR)**
• **LEE, Jaewook**
  **Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE FOR LITHIUM SECONDARY BATTERY, METHOD FOR MANUFACTURING NEGATIVE ELECTRODE FOR LITHIUM SECONDARY BATTERY, AND LITHIUM SECONDARY BATTERY COMPRISING NEGATIVE ELECTRODE**

(57)    The present application relates to a negative electrode for a lithium secondary battery, a method for manufacturing a negative electrode for a lithium secondary battery, and a lithium secondary battery including a negative electrode.

[Figure 1]

# EP 4 730 436 A1

**Description**

[Technical Field]

This application claims priority to and the benefit of Korean Patent Application No. 10-2023-0158202 filed in the Korean Intellectual Property Office on November 15, 2023, the entire contents of which are incorporated herein by reference.

The present application relates to a negative electrode for a lithium secondary battery, a method for manufacturing a negative electrode for a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the above range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.

The lithium secondary batteries are applied to various industrial fields such as automobiles, small modules, and mobile phones. The performance of lithium secondary batteries aimed in each field includes various factors, but in general, development of technology aimed at increasing energy density and securing stability, fast charging, and life performance is basically required.

In particular, as a negative electrode material, carbon-based materials such as graphite are excellent in stability and reversibility, but have a limitation in terms of capacity. Therefore, in fields for the purpose of high capacity, i.e., maximization of energy density, attempts to use Si-based materials with high theoretical capacity as the negative electrode material are increasing. However, when the Si-based material is simply included in a high content for the purpose of high capacity, the life performance deteriorates rapidly due to volume expansion compared to the carbon-based material, making it difficult to apply the Si-based material in real life.

In order to solve the problem that occurs when the Si-based material is used for a negative electrode, a variety of methods are discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path. In addition, research is being conducted to supplement the life characteristics of the silicon-based negative electrode by limiting a proportion of the silicon-based active material used during initial charging and discharging by a method of pre-lithiating the silicon-based active material layer, and imparting a reservoir role.

However, the above methods have limitations in their application because they may rather lower the performance of the battery, and thus there are still limitations in the commercialization of negative electrode batteries with a high content of silicon compounds.

Additionally, to solve the above problems, research is being conducted to prevent volume expansion and surface-concentrated degradation by using a double-layer negative electrode active material, such as a carbon-based active material that can serve as a buffer layer on top of a silicon-based active material. However, recently, such a negative electrode has also encountered a problem that heat applied to a cell rapidly transfers to other cells, causing safety concerns.

Therefore, in the development of lithium secondary batteries aimed at increasing energy density and ensuring rapid charging and life performance, research on securing thermal safety is necessary.

Prior Art Document

Japanese Patent Application Publication No. 2009-080971

[Detailed Description of the Invention]

[Technical Problem]

The present application relates to a negative electrode for a lithium secondary battery, and more particularly, to a negative electrode for a lithium secondary battery that can prevent electrode surface degradation during charge and discharge cycles, which is a problem with existing silicon-based active materials, improve cycle performance together with capacity characteristics of a lithium secondary battery, and ensure thermal safety (prevent thermal propagation), a method for manufacturing a negative electrode for a lithium secondary battery, and a lithium secondary battery including a negative electrode.

[Technical Solution]

An exemplary embodiment of the present specification provides a negative electrode for a lithium secondary battery, including a negative electrode current collector layer; a first negative electrode active material layer provided on one surface of the negative electrode current collector layer; and a second negative electrode active material layer provided on the other surface of the negative electrode current collector layer, in which the first negative electrode active material layer includes a first lower negative electrode active material layer in contact with the negative electrode current collector layer and a first upper negative electrode active material layer provided on a surface of the first lower negative electrode active material layer opposite to a surface in contact with the negative electrode current collector layer, the second negative electrode active material layer includes a second lower negative electrode active material layer in contact with the negative electrode current collector layer and a second upper negative electrode active material layer provided on a surface of the second lower negative electrode active material layer opposite to a surface in contact with the negative electrode current collector layer, one of the first lower negative electrode active material layer and the first upper negative electrode active material layer includes a silicon-based active material, the first lower negative electrode active material layer and the second upper negative electrode active material layer have the same composition, and the first upper negative electrode active material layer and the second lower negative electrode active material layer have the same composition.

An exemplary embodiment of the present application provides a method for manufacturing a negative electrode for a lithium secondary battery, the method including: preparing a first negative electrode slurry and a second negative electrode slurry; applying the first negative electrode slurry onto one surface of a negative electrode current collector layer, and applying the second negative electrode slurry onto the first negative electrode slurry applied on one surface of the negative electrode current collector layer; and applying the second negative electrode slurry onto an opposite surface of the negative electrode current collector layer, and applying the first negative electrode slurry onto the second negative electrode slurry applied on the opposite surface of the negative electrode current collector layer, in which one of the first negative electrode slurry and the second negative electrode slurry includes a silicon-based active material.

Finally, there is provided a lithium secondary battery including a positive electrode; the negative electrode for a lithium secondary battery according to the present application; a separator provided between the positive electrode and the negative electrode; and an electrolyte.

[Advantageous Effects]

In the development of automobile batteries, thermal propagation is the most critical safety issue. It involves assessing how quickly and explosively heat generated in one cell transfers to other cells, and securing thermal safety is a major part of the development.

In particular, as silicon-based materials are used to achieve high capacity recently, the problem of thermal stability has become more prominent. Accordingly, the negative electrode for a lithium secondary battery according to an exemplary embodiment of the present invention has such features that the negative electrode active material layers with a double-layer structure are provided on the upper and lower surfaces (first negative electrode active material layer and second negative electrode active material layer) of the negative electrode current collector layer, respectively, and specifically, the first lower negative electrode active material layer and the second upper negative electrode active material layer have the same composition, and the first upper negative electrode active material layer and the second lower negative electrode active material layer have the same composition.

By improving the structure of a negative electrode for a lithium secondary battery as described above, the explosive power of the negative electrode can be reduced when heat is applied. Specifically, the double-layer active materials included in the first negative electrode active material layer and the second negative electrode active material layer are arranged to have asymmetrical structures relative to each other. As a result, even if thermal runaway occurs in the negative electrode active material layer including the silicon-based active material, the thermal runaway can be controlled as another negative electrode active material layer, which can act as a barrier, is arranged.

[Brief Description of Drawings]

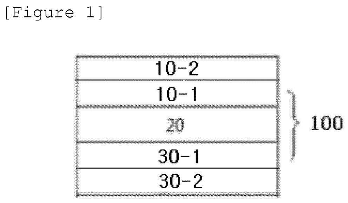

FIG. 1 is a view showing a stack structure of a negative electrode for a lithium secondary battery according to an exemplary embodiment of the present application.

<Explanation of Reference Numerals and Symbols>

10-1: first lower negative electrode active material layer
10-2: first upper negative electrode active material layer
20: negative electrode current collector layer
30-1: second lower negative electrode active material layer
30-2: second upper negative electrode active material layer

[Best Mode]

Before describing the present invention, some terms are first defined.
When one part "includes", "comprises" or "has" one constituent element in the present specification, unless otherwise specifically described, this does not mean that another constituent element is excluded, but means that another constituent element may be further included.
In the present specification, 'p to q' means a range of 'p or more and q or less'.
In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.
In the present specification, "Dn" refers to a particle diameter distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Note that the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.
In the present specification, the description "a polymer includes a certain monomer as a monomer unit" means that the monomer participates in a polymerization reaction and is included as a repeating unit in the polymer. In the present specification, when a polymer includes a monomer, this is interpreted to be the same as when the polymer includes a monomer as a monomer unit.
In the present specification, it is understood that the term 'polymer' is used in a broad sense including a copolymer unless otherwise specified as 'a homopolymer'. In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, the molecular weight refers to a weight average molecular weight unless particularly described otherwise.
Hereinafter, exemplary embodiments of the present invention will be described in detail with reference to the drawings so that one skilled in the art can readily implement the present invention. However, the present invention may be implemented in various different forms, and is not limited to the following descriptions.
An exemplary embodiment of the present specification provides a negative electrode for a lithium secondary battery, including a negative electrode current collector layer; a first negative electrode active material layer provided on one surface of the negative electrode current collector layer; and a second negative electrode active material layer provided on the other surface of the negative electrode current collector layer, in which the first negative electrode active material layer includes a first lower negative electrode active material layer in contact with the negative electrode current collector layer and a first upper negative electrode active material layer provided on a surface of the first lower negative electrode active material layer opposite to a surface in contact with the negative electrode current collector layer, the second negative electrode active material layer includes a second lower negative electrode active material layer in contact with the negative electrode current collector layer and a second upper negative electrode active material layer provided on a surface of the second lower negative electrode active material layer opposite to a surface in contact with the negative electrode current collector layer, one of the first lower negative electrode active material layer and the first upper negative electrode active material layer includes a silicon-based active material, the first lower negative electrode active material layer and the second upper negative electrode active material layer have the same composition, and the first upper negative electrode active material layer and the second lower negative electrode active material layer have the same composition.

By improving the structure of a negative electrode for a lithium secondary battery as described above, the explosive power of the negative electrode can be reduced when heat is applied. Specifically, the double-layer active materials included in the first negative electrode active material layer and the second negative electrode active material layer are arranged to have asymmetrical structures relative to each other. As a result, even if thermal runaway occurs in the negative electrode active material layer including the silicon-based active material, the explosive pressure of one part can be reduced and the acceleration of thermal runaway of the positive electrode can be controlled as another negative electrode active material layer, which can act as a barrier, is arranged.

FIG. 1 is a view showing a stack structure of a negative electrode for a lithium secondary battery according to an exemplary embodiment of the present application. Specifically, a negative electrode 100 for a lithium secondary battery can be seen which includes a first negative electrode active material layer including a first lower negative electrode active material layer 10-1 and a first upper negative electrode active material layer 10-2 on one surface of a negative electrode current collector layer 20, and a second negative electrode active material layer including a second lower negative electrode active material layer 30-1 and a second upper negative electrode active material layer 30-2. In this case, one of the first lower negative electrode active material layer and the first upper negative electrode active material layer includes a silicon-based active material, the first lower negative electrode active material layer and the second upper negative electrode active material layer have the same composition, and the first upper negative electrode active material layer and the second lower negative electrode active material layer have the same composition.

The negative electrode structure of the related art has such a structure that the first lower negative electrode active material layer 10-1 and the second lower negative electrode active material layer 30-1 have the same composition, the first upper negative electrode active material layer 10-2 and the second upper negative electrode active material layer 30-2 have the same composition, and at least one of the first lower negative electrode active material layer 10-1 and the second lower negative electrode active material layer 30-1 includes a silicon-based active material. That is, in the double-layer structure of the related art, a symmetrical structure has been developed in which the silicon-based active material is concentrated toward the negative electrode current collector layer or toward the outer side. However, when the silicon-based active material is formed while being concentrated toward the negative electrode current collector, a problem occurs in which the negative electrode current collector layer easily melts, increasing the explosive power. In addition, it is known that when the silicon-based active material is formed while being concentrated toward the outer side, the thermal runaway mechanism begins at the negative electrode and accelerates the thermal runaway at the positive electrode. In this regard, when the silicon-based active material is formed while being concentrated toward the outer side of the negative electrode as described above, it poses a problem by acting as a thermal trigger that accelerates the thermal runaway at the positive electrode, thereby reducing the safety. However, the present application can solve the above-described problems.

In the present application, the configuration in which the first negative electrode active material layer includes a first lower negative electrode active material layer in contact with the negative electrode current collector layer and a first upper negative electrode active material layer provided on a surface of the first lower negative electrode active material layer opposite to a surface in contact with the negative electrode current collector layer may mean that the negative electrode current collector layer, the first lower negative electrode active material layer, and the first upper negative electrode active material layer are sequentially stacked.

In the present application, the configuration in which the second negative electrode active material layer includes a second lower negative electrode active material layer in contact with the negative electrode current collector layer and a second upper negative electrode active material layer provided on a surface of the second lower negative electrode active material layer opposite to a surface in contact with the negative electrode current collector layer may mean that the negative electrode current collector layer, the second lower negative electrode active material layer, and the second upper negative electrode active material layer are sequentially stacked.

In an exemplary embodiment of the present application, the first negative electrode active material layer and the second negative electrode active material layer may be formed on the entire surfaces of the negative electrode current collector layer.

Below, the negative electrode for a lithium secondary battery of the present invention will be described in more detail.

A negative electrode for a lithium secondary battery includes a negative electrode current collector layer; a first negative electrode active material layer provided on one surface of the negative electrode current collector layer; and a second negative electrode active material layer provided on the other surface of the negative electrode current collector layer, in which the first negative electrode active material layer includes a first lower negative electrode active material layer in contact with the negative electrode current collector layer and a first upper negative electrode active material layer provided on a surface of the first lower negative electrode active material layer opposite to a surface in contact with the negative electrode current collector layer, and the second negative electrode active material layer includes a second lower negative electrode active material layer in contact with the negative electrode current collector layer and a second upper negative electrode active material layer provided on a surface of the second lower negative electrode active material layer opposite to a surface in contact with the negative electrode current collector layer.

In an exemplary embodiment of the present application, a thickness of the first negative electrode active material layer may be 10 $\mu$m or greater and 200 $\mu$m or less, and a thickness of the second negative electrode active material layer may be 10 $\mu$m or greater and 200 $\mu$m or less.

In an exemplary embodiment of the present application, the negative electrode current collector layer generally has a thickness of 1 $\mu$m to 100 $\mu$m. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 $\mu$m or greater and 100 $\mu$m or less.

However, the thickness may be variously modified depending on a type and a use of negative electrode used, and is not limited thereto.

In an exemplary embodiment of the present application, one of the first lower negative electrode active material layer and the first upper negative electrode active material layer includes a silicon-based active material, the first lower negative electrode active material layer and the second upper negative electrode active material layer have the same composition, and the first upper negative electrode active material layer and the second lower negative electrode active material layer have the same composition.

In the present application, 'having the same composition' may mean that the composition and content included in each active material layer are the same, and in this case, 'the same' may allow for some errors that may be permitted in the art. However, in the present application, 'having the same composition' means only the composition, and the physical properties (thickness, loading amount, and the like) may be different.

In an exemplary embodiment of the present application, the first lower negative electrode active material layer includes a silicon-based active material, the first lower negative electrode active material layer and the second upper negative electrode active material layer have the same composition, and the first upper negative electrode active material layer and the second lower negative electrode active material layer have the same composition.

In an exemplary embodiment of the present application, the first upper negative electrode active material layer includes a silicon-based active material, the first lower negative electrode active material layer and the second upper negative electrode active material layer have the same composition, and the first upper negative electrode active material layer and the second lower negative electrode active material layer have the same composition.

That is, the negative electrode for a lithium secondary battery of the present application as described above has such a feature of including a silicon-based active material, which is not included continuously in the negative electrode, but is instead provided discontinuously with another negative electrode active material layer or the negative electrode current collector layer acting as a barrier. Accordingly, even when thermal runaway occurs, thermal stability is secured as the barrier prevents heat transfer.

That is, the present application provides a negative electrode for a lithium secondary battery, in which the first negative electrode active material layer and the second negative electrode active material layer are asymmetrical with respect to the negative electrode current collector layer.

In addition, the present application provides a negative electrode for a lithium secondary battery, in which the first lower negative electrode active material layer and the second lower negative electrode active material layer have different compositions, and the first upper negative electrode active material layer and the second upper negative electrode active material layer have different compositions.

In this case, 'having different compositions' may be defined as having different compositions when the type or content of the active material included in each active material layer is different.

In the present application, there is provided the negative electrode for a lithium secondary battery in which the first lower negative electrode active material layer includes a first lower negative electrode active material layer composition, the first upper negative electrode active material layer includes a first upper negative electrode active material layer composition, the first lower negative electrode active material layer composition includes a first lower negative electrode active material, a first lower negative electrode conductive material, and a first lower negative electrode binder, and the first upper negative electrode active material layer composition includes a first upper negative electrode active material, a first upper negative electrode conductive material, and a first upper negative electrode binder.

In the present application, there is provided the negative electrode for a lithium secondary battery in which one of the first lower negative electrode active material and the first upper negative electrode active material includes one or more selected from the group consisting of a carbon-based active material, a silicon-based active material, a metal-based active material capable of alloying with lithium, and a lithium-containing nitride, and the other of the first lower negative electrode active material and the first upper negative electrode active material includes a carbon-based active material.

In the present application, there is provided the negative electrode for a lithium secondary battery in which the first lower negative electrode active material includes one or more selected from the group consisting of a carbon-based active material, a silicon-based active material, a metal-based active material capable of alloying with lithium, and a lithium-containing nitride, and the first upper negative electrode active material includes a carbon-based active material.

In addition, there is provided a negative electrode for a lithium secondary battery in which the first upper negative electrode active material includes one or more selected from the group consisting of a carbon-based active material, a silicon-based active material, a metal-based active material capable of alloying with lithium, and a lithium-containing nitride, and the first lower negative electrode active material includes a carbon-based active material.

In the present application, there is provided the negative electrode for a lithium secondary in which one of the first lower negative electrode active material and the first upper negative electrode active material includes a carbon-based active material and a silicon-based active material, and the other of the first lower negative electrode active material and the first upper negative electrode active material includes a carbon-based active material.

In the present application, the first lower negative electrode active material may include a carbon-based active material and a silicon-based active material, the first upper negative electrode active material may include a carbon-based active material, and the silicon-based active material may be included in an amount of 1 part by weight or more and 50 parts by weight or less based on 100 parts by weight of the first lower negative electrode active material.

In another exemplary embodiment, the first lower negative electrode active material may include a carbon-based active material and a silicon-based active material, the first upper negative electrode active material may include a carbon-based active material, and the silicon-based active material may be included in an amount of 1 part by weight or more and 50 parts by weight or less, preferably 3 parts by weight or more and 40 parts by weight or less, and more preferably 5 parts by weight or more and 20 parts by weight or less, based on 100 parts by weight of the first lower negative electrode active material.

In the present application, the first upper negative electrode active material may include a carbon-based active material and a silicon-based active material, the first lower negative electrode active material may include a carbon-based active material, and the silicon-based active material may be included in an amount of 1 part by weight or more and 50 parts by weight or less based on 100 parts by weight of the first upper negative electrode active material.

In another exemplary embodiment, the first upper negative electrode active material may include a carbon-based active material and a silicon-based active material, the first lower negative electrode active material may include a carbon-based active material, and the silicon-based active material may be included in an amount of 1 part by weight or more and 50 parts by weight or less, preferably 3 parts by weight or more and 40 parts by weight or less, and more preferably 5 parts by weight or more and 20 parts by weight or less, based on 100 parts by weight of the first upper negative electrode active material.

As described above, the first lower negative electrode active material or the first upper negative electrode active material includes the silicon-based active material in the amount of parts by weight described above, enabling high energy density to be ensured and life performance issues related to volume expansion to be minimized, making it possible to provide a high-capacity negative electrode with improved life performance. That is, the negative electrode active material layer composition according to the present application uses a silicon-based active material with a significantly high capacity within the above range while also using another negative electrode active material layer stacked together, thereby solving the problems of surface degradation during charging and discharging, uniformity during pre-lithiation, and life characteristics, without compromising the entire capacity performance of the entire negative electrode.

In the present application, there is provided the negative electrode for a lithium secondary battery in which the silicon-based active material includes $SiO_x$ (x=0), $SiO_x$ (0 < x < 2), or SiC.

In an exemplary embodiment of the present application, for the silicon-based active material, particularly pure silicon ($SiO_x$ (x=0)) particles may be used.

Note that an average particle diameter (D50) of the silicon-based active material of the present invention may be 3 $\mu$m to 10 $\mu$m, specifically 4 $\mu$m to 8 $\mu$m, and more specifically 5 $\mu$m to 7 $\mu$m. When the average particle diameter falls within the above range, a specific surface area of the particles falls within a suitable range, resulting in formation of the viscosity of the negative electrode slurry within an appropriate range. Accordingly, particles constituting the negative electrode slurry are smoothly dispersed. In addition, when the size of the first negative electrode active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. Note that, when the average particle diameter falls within the above range, excessively large silicon particles are excluded, resulting in formation of a smooth surface of the negative electrode. Accordingly, a phenomenon of current density non-uniformity during charging and discharging can be prevented.

In an exemplary embodiment of the present application, the silicon-based active material generally has a characteristic BET surface area. The BET surface area of the silicon-based active material is preferably 0.1 $m^2$/g to 150.0 $m^2$/g, more preferably 0.1 $m^2$/g to 100.0 $m^2$/g, particularly preferably 0.2 $m^2$/g to 80.0 $m^2$/g, and most preferably 0.2 $m^2$/g to 18.0 $m^2$/g. The BET surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or may be present in the form of a silicon-containing film or coating.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity is determined by Formula 1 below, in which A is an area and P is a boundary line.

[Formula 1]

$$4\pi A/P^2$$

In an exemplary embodiment of the present application, representative examples of the carbon-based active material include natural graphite, artificial graphite, expandable graphite, carbon fiber, non-graphitizable carbon, carbon black, carbon nanotubes, fullerene, activated carbon, or the like, and the carbon-based active material can be used without limitation as long as the carbon-based active material is typically used in a carbon material for a lithium secondary battery, and specifically may be processed into a spherical or point-like shape and used.

In an exemplary embodiment of the present application, there is provided the negative electrode for a lithium secondary battery in which the carbon-based active material includes graphite, the graphite includes artificial graphite and natural graphite, and a weight ratio of the artificial graphite and natural graphite is 5:5 to 9.5:0.5.

The artificial graphite according to an exemplary embodiment of the present invention may be in the form of an initial particle, or may be in the form of a secondary particle in which the plurality of initial particles are aggregated.

As used in the present invention, the term "initial particle" means an original particle when a different type of particle is formed from one particle, and a plurality of initial particles may be aggregated, bound or assembled to form a secondary particle.

As used in the present invention, the term "secondary particle" means a large physically distinguishable particle formed by aggregating, binding or assembling individual initial particles.

The artificial graphite of the initial particle may be manufactured by heat-treating one or more selected from the group consisting of needle cokes, mosaic cokes and coal tar pitch.

The artificial graphite is generally manufactured by carbonizing raw materials such as coal tar, coal tar pitch and petroleum-based heavy oil to 2,500°C or higher, and after such graphitization, the artificial graphite may be subjected to particle size adjustment such as pulverization and formation of secondary particles and then used as a negative electrode active material. In the case of artificial graphite, the crystals are randomly distributed in the particles, the circularity is lower than that of natural graphite, and the shape is slightly sharp.

Examples of the artificial graphite used in an exemplary embodiment of the present invention include mesophase carbon microbeads (MCMB) and mesophase pitch-based carbon fiber (MPCF), which are commercially widely used, artificial graphite graphitized in block form, artificial graphite graphitized in powder form, and the like. The artificial graphite may have a circularity of 0.91 or less, or 0.6 to 0.91, or 0.7 to 0.9.

Additionally, the artificial graphite may have a particle diameter of 5 to 30 $\mu$m, preferably 10 to 25 $\mu$m.

Specifically, the artificial graphite initial particles may have a D50 of 6 $\mu$m to 15 $\mu$m, 6 $\mu$m to 10 $\mu$m, or 6 $\mu$m to 9 $\mu$m. When the D50 of the initial particle satisfies such a range, the initial particle may be formed so as to have high graphitization, the orientation index of the negative electrode active material particle is appropriately secured, so that the rapid charging performance can be improved.

The artificial graphite secondary particle may be formed by assembling initial particles. That is, the secondary particle may be a structure formed by aggregating the initial particles with each other through an assembling process. The secondary particle may include a carbonaceous matrix that aggregates the initial particles. The carbonaceous matrix may include at least one of soft carbon and graphite. The soft carbon may be formed by heat treating pitch.

The carbonaceous matrix may be included in the secondary particle in an amount of 8% to 16% by weight, specifically 9% to 12% by weight. This range is at a level lower than the content of a carbonaceous matrix used in typical artificial graphite secondary particle. In this range, the particle size of the initial particles in the secondary particle is controlled, so that structurally stable secondary particles may be manufactured even with a small amount of carbonaceous matrix required for assembly, and the amount of initial particles constituting the secondary particles may also be uniform.

A surface of the artificial graphite secondary particle may include a carbon coating layer, and the carbon coating layer may include at least one of amorphous carbon and crystalline carbon.

The crystalline carbon may further improve conductivity of the negative electrode active material. The crystalline carbon may include at least one selected from the group consisting of fluorene and graphene.

The amorphous carbon may appropriately maintain the strength of the coating layer to suppress expansion of the natural graphite. The amorphous carbon may be a carbon-based material formed using at least one carbide selected from the group consisting of tar, pitch and other organic materials, or a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The artificial graphite secondary particles may have a D50 of 10 $\mu$m to 25 $\mu$m, specifically 12 $\mu$m to 22 $\mu$m, and more specifically 13 $\mu$m to 20 $\mu$m. When the above range is satisfied, the artificial graphite secondary particles may be uniformly dispersed in the slurry, and the charging performance of a battery may also be improved.

The artificial graphite secondary particle may have a tap density of 0.85 g/cc to 1.30 g/cc, specifically 0.90 g/cc to 1.10 g/cc, and more specifically 0.90 g/cc to 1.07 g/cc. When the above range is satisfied, packing of artificial graphite secondary particles may be smoothly performed in the negative electrode, which means that the negative electrode adhesive force may be improved.

The natural graphite may be generally in the form of plate-like aggregates before being processed, and the plate-like particles may be manufactured in the form of a sphere having a smooth surface through post-treatment processing such as particle pulverization and re-assembly process for use as an active material for manufacture of an electrode.

The natural graphite used in an exemplary embodiment of the present invention may have a circularity of greater than 0.91 and 0.97 or less, or 0.93 to 0.97, or 0.94 to 0.96.

The natural graphite may have a particle diameter of 5 to 30 $\mu$m, or 10 to 25 $\mu$m.

According to an exemplary embodiment of the present invention, a weight ratio of the artificial graphite and the natural graphite may be 5:5 to 9.5:0.5, or 5:5 to 9.3:0.7, or 5:5 to 9:1, or 6:4 to 9:1. When the weight ratio of the artificial graphite and the natural graphite satisfies such a range, better output may be exhibited, which may be advantageous in terms of life and rapid charging performance.

In an exemplary embodiment of the present application, the planar conductive material used as the negative electrode conductive material described below has a different structure and role from the carbon-based active material generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material used as the negative electrode conductive material described below is a material having a planar or plate-like shape, and may be expressed as plate-like graphite. That is, the planar conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, may have a BET specific surface area that satisfies a range of 0.1 m$^2$/g or greater and 4.5 m$^2$/g or less. In addition, plate-like graphite, which is a planar conductive material, has a planar shape, and a BET specific surface area thereof may be 5 m$^2$/g or greater.

A representative example of the metal-based active material may be a compound containing any one or two or more metal elements selected from the group consisting of Al, Sn, Ag, Bi, Mg, Zn, In, Ge, Pb, Pd, Pt, Ti, Sb, Ga, Mn, Fe, Co, Ni, Cu, Sr, and Ba and the like. These metal compounds may be used in any form such as a single body, an alloy, an oxide (TiO$_2$, SnO$_2$ and the like), a nitride, a sulfide, a boride, and an alloy with lithium, but the single body, the alloy, the oxide, and the alloy with lithium may be increased in capacity.

In an exemplary embodiment of the present application, there is provided the negative electrode for a lithium secondary battery in which the first lower negative electrode active material is included in an amount of 60 parts by weight or more based on 100 parts by weight of the first lower negative electrode active material layer composition.

In another exemplary embodiment, the first lower negative electrode active material may be included in an amount of 60 parts by weight or more, preferably at least 65 parts by weight or more, and more preferably 70 parts by weight or more, and 95 parts by weight or less, preferably 90 parts by weight or less, and more preferably 80 parts by weight or less, based on 100 parts by weight of the first lower negative electrode active material layer composition.

In an exemplary embodiment of the present application, there is provided the negative electrode for a lithium secondary battery in which the first upper negative electrode active material is included in an amount of 60 parts by weight or more based on 100 parts by weight of the first upper negative electrode active material layer composition.

In another exemplary embodiment, the first upper negative electrode active material may be included in an amount of 60 parts by weight or more, preferably at least 65 parts by weight or more, and more preferably 70 parts by weight or more, and 95 parts by weight or less, preferably 90 parts by weight or less, and more preferably 80 parts by weight or less, based on 100 parts by weight of the first upper negative electrode active material layer composition.

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, in an exemplary embodiment of the present application, the first lower negative electrode active material layer composition may include a first lower negative electrode active material, a first lower negative electrode conductive material, and a first lower negative electrode binder, and the first upper negative electrode active material layer composition may include a first upper negative electrode active material, a first upper negative electrode conductive material, and a first upper negative electrode binder.

In this case, the description of the negative electrode conductive material described below may be equally applied to the descriptions of the first lower negative electrode conductive material and the first upper negative electrode conductive material, and the description of the negative electrode binder described below may be equally applied to the descriptions of the first lower negative electrode binder and the first upper negative electrode binder.

In an exemplary embodiment of the present application, the negative electrode conductive material may be a material that can be generally used in the art without limitation, and specifically may include one or more selected from the group consisting of a point-like conductive material, a planar conductive material, and a linear conductive material.

In an exemplary embodiment of the present application, the point-like conductive material refers to a conductive material that may be used for improving conductivity of the negative electrode, has conductivity without causing a chemical change and has a point-like or spherical shape. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present application, a particle diameter of the point-like conductive material may be 10 nm to 100 nm, preferably 20 nm to 90 nm, and more preferably 20 nm to 60 nm.

In an exemplary embodiment of the present application, the second negative electrode conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, an average particle diameter (D50) of the planar conductive material may be 2 to 7 $\mu$m, specifically 3 to 6 $\mu$m, and more specifically 4 to 5 $\mu$m. When the above range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present application, there is provided the negative electrode composition in which the planar conductive material has D10 of 0.5 μm or greater and 1.5 μm or less, D50 of 2.5 μm or greater and 3.5 μm or less and D90 of 7.0 μm or greater and 15.0 μm or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m$^2$/g or greater.

In another exemplary embodiment, the planar conductive material may have a BET specific surface area of 5 m$^2$/g or greater and 500 m$^2$/g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may fall within a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may fall within a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In particular, the linear conductive material according to an exemplary embodiment of the present application may be a single-walled carbon nanotube (SWCNT).

In the present application, there is provided the negative electrode for a lithium secondary battery in which the first lower negative electrode conductive material and the first upper negative electrode conductive material include at least a linear conductive material.

The single-walled carbon nanotube is a material in which carbon atoms arranged in a hexagonal shape form a tube, and exhibits non-conductor, conductor, or semiconductor properties depending on the unique chirality thereof, and has a tensile strength about 100-times higher than that of steel, has excellent flexibility, elasticity and the like, and also has chemically stable properties because carbon atoms are linked by strong covalent bonds.

An average diameter of the single-walled carbon nanotubes is 0.5 nm to 15 nm. According to an exemplary embodiment of the present invention, the average diameter of the single-walled carbon nanotubes may be 1 nm to 10 nm, 1 nm to 5 nm, or 1 nm to 2 nm. When the average diameter of the single-walled carbon nanotubes falls within the above range, it is possible to maintain the electrical conductivity of the negative electrode even with a very small content of single-walled carbon nanotubes, while also achieving a desirable viscosity and solid content during preparation of a conductive material dispersion solution. In the conductive material dispersion solution, single-walled carbon nanotubes are aggregated with each other, and therefore, may be present in an entangled state (aggregate). Accordingly, the average diameter can be derived by measuring a diameter of a single-walled carbon nanotube agglomerate in an arbitrarily entangled state extracted from the conductive material dispersion solution using a SEM or TEM, and then dividing the diameter of the agglomerate by the number of single-walled carbon nanotubes constituting the agglomerate.

The BET specific surface area of the above single-walled carbon nanotube may be 500 m$^2$/g to 1,500 m$^2$/g, or 900 m$^2$/g to 1,200 m$^2$/g, specifically 250 m$^2$/g to 330 m$^2$/g. When the above range is satisfied, a conductive material dispersion solution having a preferred solid is derived, and the viscosity of the negative electrode slurry is prevented from excessively increasing. The BET specific surface area may be measured by a nitrogen adsorption BET method.

An aspect ratio of the single-walled carbon nanotube may be 50 to 20,000, or a length of the single-walled carbon nanotube may be 5 to 100 μm, or 5 to 50 μm. When the aspect ratio or length falls within such a range, the specific surface area is at a high level, so the single-walled carbon nanotubes in the negative electrode may be adsorbed to the active material particles by a strong attractive force. Accordingly, the conductive network can be smoothly maintained even during the volume expansion of the negative electrode active material. The aspect ratio may be confirmed by obtaining an average of aspect ratios of 15 single-walled carbon nanotubes with a large aspect ratio and 15 single-walled carbon nanotubes with a small aspect ratio when the single-walled carbon nanotube powder is observed through a SEM.

The single-walled carbon nanotubes described above are advantageous over multi-walled carbon nanotubes or double-walled carbon nanotubes due to their larger aspect ratio, greater length, and larger volume, enabling formation of an electrical network even with a small amount.

In an exemplary embodiment of the present application, the first lower negative electrode conductive material may satisfy a range of 1 part by weight or more and 40 parts by weight or less based on 100 parts by weight of the first lower negative electrode active material layer composition.

In another exemplary embodiment, the first lower negative electrode conductive material may be included in an amount of 1 part by weight or more and 40 parts by weight or less, preferably 10 parts by weight or more and 30 parts by weight or less, and more preferably 15 parts by weight or more and 25 parts by weight or less, based on 100 parts by weight of the first lower negative electrode active material layer composition.

In an exemplary embodiment of the present application, the first upper negative electrode conductive material may satisfy a range of 1 part by weight or more and 40 parts by weight or less based on 100 parts by weight of the first upper negative electrode active material layer composition.

In another exemplary embodiment, the first upper negative electrode conductive material may be included in an amount of 1 part by weight or more and 40 parts by weight or less, preferably 10 parts by weight or more and 30 parts by weight or less, and more preferably 15 parts by weight or more and 25 parts by weight or less, based on 100 parts by weight of the first upper negative electrode active material layer composition.

In an exemplary embodiment of the present application, the negative electrode conductive material may include a point-like conductive material, a planar conductive material, and a linear conductive material, and the point-like conductive material, the planar conductive material, and the linear conductive material may satisfy a ratio of 1:1:0.01 to 1:1:1.

In an exemplary embodiment of the present application, the point-like conductive material may be included in an amount of 1 part by weight or more and 60 parts by weight or less, preferably 5 parts by weight or more and 50 parts by weight or less, and more preferably 10 parts by weight or more and 50 parts by weight or less, on the basis of 100 parts by weight of the negative electrode conductive material.

In an exemplary embodiment of the present application, the planar conductive material may be included in an amount of 1 part by weight or more and 60 parts by weight or less, preferably 5 parts by weight or more and 50 parts by weight or less, and more preferably 10 parts by weight or more and 50 parts by weight or less, on the basis of 100 parts by weight of the negative electrode conductive material.

In an exemplary embodiment of the present application, the linear conductive material may be included in an amount of 0.01 part by weight or more and 10 parts by weight or less, preferably 0.05 part by weight or more and 8 parts by weight or less, and more preferably 0.1 part by weight or more and 5 parts by weight or less, on the basis of 100 parts by weight of the negative electrode conductive material.

In an exemplary embodiment of the present application, the negative electrode conductive material may include a linear conductive material and a planar conductive material.

In an exemplary embodiment of the present application, the negative electrode conductive material may include a linear conductive material and a planar conductive material, and a ratio of the linear conductive to the planar conductive material may be 0.01:1 to 0.1:1.

In the exemplary embodiment of the present application, as the negative electrode conductive material particularly includes the linear conductive material and the planar conductive material and the composition and ratio described above are satisfied, respectively, the life characteristics of an existing lithium secondary battery are not significantly affected, and the number of points where charging and discharging are possible increases, so that output characteristics are excellent at a high C-rate.

In an exemplary embodiment of the present application, the negative electrode conductive material may be composed of a linear conductive material.

In this case, the linear conductive material may be included in an amount of 0.1 to 2 parts by weight, 0.1 to 0.7 part by weight, or 0.1 to 0.3 part by weight based on 100 parts by weight of the negative electrode active material. When the content of the linear conductive material satisfies such a range, it is possible to sufficiently construct an electrical network in the negative electrode active material layer, and it is advantageous in terms of mixing and coating processability in manufacturing the electrode. Further, in the negative electrode according to an exemplary embodiment of the present invention, since a linear conductive material is included in both the first negative electrode active material layer and the second negative electrode active material layer, a conductive network between the active materials according to the volume expansion and contraction of a Si electrode can be maintained, which is advantageous in terms of life, and the rapid charging performance can be maintained. Basically, the rapid charging performance is advantageous because a Si-based negative electrode can be coated with a thin film, as compared with graphite, but the linear conductive material also helps rapid charging by firmly maintaining a conductive network, and furthermore, may be further helpful for improving an initial sudden drop in the life of the Si-based negative electrode and maintaining the life thereof.

The negative electrode conductive material according to the present application has a completely different configuration from a positive electrode conductive material that is applied to the positive electrode. That is, the second negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

According to an exemplary embodiment of the present application, the negative electrode binder serves to support the active material and conductive material in order to prevent distortion and structural deformation of the negative electrode structure during the volume expansion and relaxation of the negative electrode active material. When the above-mentioned role is satisfied, all general binders may be applied, specifically, an aqueous binder may be used, and more specifically, a polyacrylamide (PAM)-based binder may be used.

In an exemplary embodiment of the present application, the first lower negative electrode binder may be included in an amount of 30 parts by weight or less, preferably 25 parts by weight or less, and more preferably 20 parts by weight or less, and 5 parts by weight or more, or 10 parts by weight or more, based on 100 parts by weight of the first lower negative electrode active material layer composition.

In an exemplary embodiment of the present application, the first upper negative electrode binder may be included in an amount of 30 parts by weight or less, preferably 25 parts by weight or less, and more preferably 20 parts by weight or less, and 5 parts by weight or more, or 10 parts by weight or more, based on 100 parts by weight of the first upper negative electrode active material layer composition.

In the present application, there is provided the negative electrode for a lithium secondary battery in which the second lower negative electrode active material layer includes a second lower negative electrode active material layer composition, the second upper negative electrode active material layer includes a second upper negative electrode active material layer composition, the second lower negative electrode active material layer composition includes a second lower negative electrode active material, a second lower negative electrode conductive material, and a second lower negative electrode binder, and the second upper negative electrode active material layer composition includes a second upper negative electrode active material, a second upper negative electrode conductive material, and a second upper negative electrode binder.

In this case, the first lower negative electrode active material layer and the second upper negative electrode active material layer are different only in the layers (second and first) used, and the same description can be applied. In addition, the first upper negative electrode active material layer and the second lower negative electrode active material layer are different only in the layers (second and first) used, and the same description can be applied.

An exemplary embodiment of the present application provides a method for manufacturing a negative electrode for a lithium secondary battery, the method including the steps of: preparing a first negative electrode slurry and a second negative electrode slurry; applying the first negative electrode slurry onto one surface of a negative electrode current collector layer, and applying the second negative electrode slurry onto the first negative electrode slurry applied on one surface of the negative electrode current collector layer; and applying the second negative electrode slurry onto an opposite surface of the negative electrode current collector layer, and applying the first negative electrode slurry onto the second negative electrode slurry applied on the opposite surface of the negative electrode current collector layer, in which one of the first negative electrode slurry and the second negative electrode slurry includes a silicon-based active material.

In an exemplary embodiment of the present application, the first negative electrode slurry may include a first composition and a negative electrode slurry solvent.

In this case, the above description of the first lower negative electrode active material layer composition or the second upper negative electrode active material layer composition may be applied to the first composition.

In an exemplary embodiment of the present application, the second negative electrode slurry may include a second composition and a negative electrode slurry solvent.

In this case, the description of the first upper negative electrode active material layer composition or the second lower negative electrode active material layer composition may be applied to the second composition.

In the present application, solid contents of the first negative electrode slurry and the second negative electrode slurry may fall within a range of 10% to 40%.

For the slurry solvent, a solvent that is used in the art can be used without limitation, and specifically, nmP or water may be used.

In an exemplary embodiment of the present application, there is provided the method for manufacturing a negative electrode for a lithium secondary battery in which the step of applying the first negative electrode slurry onto one surface of the negative electrode current collector layer, and applying the second negative electrode slurry onto the first negative electrode slurry applied on one surface of the negative electrode current collector layer includes steps of partially or completely drying the first negative electrode slurry after applying the same, and applying the second negative electrode slurry onto the first negative electrode slurry.

The applying method is a wet on dry process, and specifically, involves preparing and applying a first negative electrode slurry onto the negative electrode current collector layer in the wet on dry process. Thereafter, a first negative electrode slurry mixture is dried to form a first lower negative electrode active material layer. Thereafter, a second negative electrode slurry mixture is prepared, applied to the first lower negative electrode active material layer, and dried to form a first upper negative electrode active material layer. Thereafter, each layer may be rolled and pressed to form a negative electrode for a lithium secondary battery according to the present application.

In an exemplary embodiment of the present application, there is provided the method for manufacturing a negative electrode for a lithium secondary battery in which the step of applying the second negative electrode slurry onto an opposite surface of the negative electrode current collector layer, and applying the first negative electrode slurry onto the second negative electrode slurry applied on the opposite surface of the negative electrode current collector layer includes steps of partially or completely drying the second negative electrode slurry after applying the same, and applying the first negative electrode slurry onto the second negative electrode slurry.

In an exemplary embodiment of the present application, there is provided the method for manufacturing a negative electrode for a lithium secondary battery in which the step of applying the first negative electrode slurry onto one surface of the negative electrode current collector layer, and applying the second negative electrode slurry onto the first negative electrode slurry applied on one surface of the negative electrode current collector layer includes a step of applying a second negative electrode slurry onto the first negative electrode slurry in an undried state after applying the first negative electrode slurry.

The applying method is a wet on wet process, and specifically, involves preparing and applying a first negative electrode slurry onto the negative electrode current collector layer in the wet on wet process. Thereafter, a second negative electrode slurry mixture is prepared in a state in which the first negative electrode slurry mixture is not dried, and the second negative electrode slurry mixture is applied onto the first negative electrode slurry and dried to form a first negative electrode active material layer. Thereafter, each layer may be rolled and pressed to form a negative electrode for a lithium secondary battery according to the present application.

In an exemplary embodiment of the present application, there is provided the method for manufacturing a negative electrode for a lithium secondary battery in which the step of applying the second negative electrode slurry onto the opposite surface of the negative electrode current collector layer, and applying the first negative electrode slurry onto the second negative electrode slurry applied on the opposite surface of the negative electrode current collector layer includes a step of applying a first negative electrode slurry onto the second negative electrode slurry in an undried state after applying the second negative electrode slurry.

In particular, the wet on dry process is a process in which the first negative electrode slurry composition is applied and partially or completely dried, and then the second negative electrode slurry composition is applied thereon. Through the above process, the first lower negative electrode active material layer and the first upper negative electrode active material layer can have a clear boundary. Accordingly, the compositions included in the first lower negative electrode active material layer and the first upper negative electrode active material layer do not mix, thereby enabling a characteristic configuration of a double layer.

On the other hand, as a result of the wet on wet process described above, a bonding region in which the first lower negative electrode active material layer and the first upper negative electrode active material layer are mixed may be formed. In this case, in order for the wet on wet process to occur, the viscosity of the first lower negative electrode active material layer composition must be lower than the viscosity of the first upper negative electrode active material layer composition so that mutual mixing can occur in the bonding region and during the process.

An exemplary embodiment of the present application provides a lithium secondary battery including a positive

**EP 4 730 436 A1**

electrode; the negative electrode for a lithium secondary battery according to the present application; a separator provided between the positive electrode and the negative electrode; and an electrolyte.

The secondary battery according to an exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolytic solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**<Preparation Examples>**

**<Preparation of Negative Electrode>**

**<Example 1>**

**<Preparation of First Negative Electrode Slurry>**

As an active material of a first negative electrode slurry, artificial graphite (average particle diameter (D50) = 19 $\mu$m) and spherical natural graphite (average particle diameter (D50) = 11 $\mu$m) were uniformly mixed at a weight ratio of 8:2. Then, the active material, carbon black as a first conductive agent, SBR as a binder, and carboxymethyl cellulose (CMC) as a thickener were mixed at a weight ratio of 95:1.5:2.3:1.2, respectively, and then the mixture was mixed with water ($H_2O$) as a first solvent to prepare a first negative electrode slurry.

**<Preparation of Second Negative Electrode Slurry>**

As an active material of a second negative electrode slurry, artificial graphite (average particle diameter (D50) = 19 $\mu$m), spherical natural graphite (average particle diameter (D50) = 11 $\mu$m), and SiO were uniformly mixed at a weight ratio of 56:14:30. Then, the active material, CNT as a first conductive agent, SBR as a binder, and carboxymethyl cellulose (CMC) as a thickener were mixed at a weight ratio of 96.293:0.043:3.6:0.065, respectively, and then the mixture was mixed with water ($H_2O$) as a first solvent to prepare a second negative electrode slurry.

The second negative electrode slurry prepared as described above was applied to a top surface of Cu as a negative electrode current collector layer, and the first negative electrode slurry was applied on top of the second negative electrode slurry to form a first negative electrode active material layer. In this case, the applying was performed so that each loading amount (mAh/cm$^2$) was 1:1.

After the applying as described above, the first negative electrode slurry prepared as described above was applied to a back surface of Cu as a negative electrode current collector layer, and the second negative electrode slurry was applied on top of the first negative electrode slurry and dried to form a second negative electrode active material layer.

Information on the slurries applied to the first negative electrode active material layer and the second negative electrode active material layer in Example 1 are shown in Table 1 below.

[Table 1]

| | First negative electrode active material layer | | Second negative electrode active material layer | | Electrode structure |
| --- | --- | --- | --- | --- | --- |
| | First lower negative electrode active material layer | First upper negative electrode active material layer | Second lower negative electrode active material layer | Second upper negative electrode active material layer | |
| Example 1 | second negative electrode slurry | first negative electrode slurry | first negative electrode slurry | second negative electrode slurry | DL |
| Example 2 | first negative electrode slurry | second negative electrode slurry | second negative electrode slurry | first negative electrode slurry | DL |
| Comparative Example 1 | second negative electrode slurry | first negative electrode slurry | second negative electrode slurry | first negative electrode slurry | DL |
| Comparative Example 2 | first negative electrode slurry | second negative electrode slurry | first negative electrode slurry | second negative electrode slurry | DL |
| Comparative Example 3 | first negative electrode slurry | | second negative electrode slurry | | SL |
| Comparative Example 4 | third negative electrode slurry | | third negative electrode slurry | | SL |

In Table 1 above, DL indicates Double layer, meaning that the negative electrode active material layer has a double layer, and SL indicates Single layer, meaning that the negative electrode active material layer has a single layer.

For reference, the preparation method of Comparative Example 4 in Table 1 above is as follows.

### <Preparation of Third Negative Electrode Slurry>

As an active material of a third negative electrode slurry, artificial graphite (average particle diameter (D50) = 19 $\mu$m), spherical natural graphite (average particle diameter (D50) = 11 $\mu$m), and SiO were uniformly mixed at a weight ratio of 68:17:15. Then, the active material, CNT as a first conductive agent, SBR as a binder, and carboxymethyl cellulose (CMC) as a thickener were mixed at a weight ratio of 96.293:0.043:3.6:0.065, respectively, and then the mixture was mixed with water (H$_2$O) as a first solvent to prepare a third negative electrode slurry.

Cu was prepared as a negative electrode current collector layer, and the third negative electrode slurry was coated on both surfaces of the Cu, producing a single layer.

### <Preparation of Secondary Battery>

A positive electrode slurry (solid concentration: 78 wt%) was prepared by adding LiNi$_{0.6}$Co$_{0.2}$Mn$_{0.2}$O$_2$ (average particle diameter (D50): 15 $\mu$m) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated on both surfaces of an aluminum current collector (thickness: 12 $\mu$m) serving as a positive electrode current collector with a loading amount of 537 mg/25 cm$^2$, which was then roll-pressed and dried in a vacuum oven at 130°C for 10 hours to form a positive electrode active material layer (thickness: 65 $\mu$m), resulting in preparation of a positive electrode (thickness of positive electrode: 77 $\mu$m, porosity: 26%).

A secondary battery of Example 1 was prepared by interposing a polyethylene separator between the positive electrode and the negative electrode of Example 1 and injecting an electrolyte.

The electrolyte was obtained by adding vinylene carbonate to an organic solvent, in which fluoroethylene carbonate (FEC) and diethyl carbonate (DMC) were mixed at a volume ratio of 30:70, in an amount of 3 wt% based on a total weight of the electrolyte and adding $LiPF_6$ as a lithium salt to a concentration of 1M.

Secondary batteries were each manufactured in the same manner as in the above method, except that the negative electrodes of the Examples and the Comparative Examples were used.

## Experimental Example 1: Evaluation of Service Life Characteristics

For the secondary batteries including the negative electrodes manufactured in the Examples and Comparative Examples, the life and capacity retention rate were evaluated using an electrochemical charging and discharging device. The secondary battery was subjected to a cycle test at 4.2-3.0 V 1C/0.5C, and the capacity retention rate was measured by performing charging/discharging at 0.33C/0.33C (4.2-3.0 V) every 50 cycles during the test.

Capacity retention rate (%) = {(discharge capacity at $N^{th}$ cycle)/(discharge capacity at first cycle)} $\times$ 100

## Experimental Example 2: Evaluation of Resistance Increase Rate Measurement

In the test in Experimental Example 1, the capacity retention rates were measured by charging/discharging (4.2-3.0V) the batteries at 0.33C/0.33C every 50 cycles, and then the resistance increase rates were compared and analyzed by discharging the batteries with a pulse of 2.5C at SOC50 to measure the resistance.

In addition, for the life characteristic evaluation and the resistance increase rate measurement evaluation, data was calculated at 200 cycles, respectively, and the results are shown in Table 2 below.

## Experimental Example 3: TP Evaluation

For the lithium secondary batteries prepared in the above Examples and Comparative Examples, a heat pad in contact with the cell was heated to induce thermal runaway of the cell.

The experiment was conducted under an $N_2$ atmosphere in an autoclave (isolated from the external environment/atmosphere), and the pressure of gas emitted when thermal runaway occurred was measured using a pressure gauge in the autoclave, and the TR rate was determined as shown in Table 2 below.

TR Rate = (max pressure - pre-ignition pressure)/(cell capacity)/(time immediately before ignition - time to max pressure)

[Table 2]

| | Capacity retention rate evaluation (%, @200cycle) | Resistance increase rate (%, @200cycle) | TR rate evaluation |
|---|---|---|---|
| Example 1 | 89 | 20 | 5.3 |
| Example 2 | 89 | 20 | 5.4 |
| Comparative Example 1 | 87 | 35 | 12.3 |
| Comparative Example 2 | 88 | 19 | 10.9 |
| Comparative Example 3 | 82 | 40 | 11.5 |
| Comparative Example 4 | 86 | 25 | 10.7 |

As can be seen in Tables 1 and 2 above, it was confirmed that by improving the structure of the negative electrode for a lithium secondary battery according to the present application, the explosive power of the negative electrode can be reduced when heat is applied, specifically, the double-layer active materials included in the first negative electrode active material layer and the second negative electrode active material layer are arranged to have asymmetrical structures relative to each other, so that even if thermal runaway occurs in the negative electrode active material layer including the silicon-based active material, the thermal runaway can be controlled as another negative electrode active material layer, which can act as a barrier, is arranged.

In Comparative Examples 1 and 2, it can be confirmed that the negative electrodes of the DL structure are the same, but the top surface and the bottom surface (i.e., the first negative electrode active material layer and the second negative electrode active material layer) have a symmetrical shape with respect to the negative electrode current collector layer. In this case, in Comparative Example 1, the negative electrode active material layer including a silicon-based active material is provided on the negative electrode current collector side, and in Comparative Example 2, the negative electrode active material layer including a silicon-based active material is concentrated on a side facing the positive electrode. As a result, the evaluation results in the life and resistance evaluations were somewhat lower than those in the Examples, and the evaluation result in the thermal stability evaluation was particularly poor. This corresponds to a result of another negative electrode active material layer, which can act as a barrier, not being arranged, as described above.

Comparative Examples 3 and 4 show a negative electrode of an SL structure. Specifically, Comparative Example 3 shows the negative electrode having a carbon-based active material on the top surface (first negative electrode active material layer) and a silicon-based active material on the back surface (second negative electrode active material layer), and Comparative Example 4 shows the negative electrode in which silicon and a carbon-based active material are mixed. In this case, too, it was confirmed that the thermal stability evaluation was inferior to those of Examples 1 and 2 of the present invention. In addition, it was confirmed that the life and resistance increase rate were inferior to those of the examples of the present application.

## Claims

1. A negative electrode for a lithium secondary battery, comprising:

   a negative electrode current collector layer;
   a first negative electrode active material layer provided on one surface of the negative electrode current collector layer; and
   a second negative electrode active material layer provided on the other surface of the negative electrode current collector layer, wherein
   the first negative electrode active material layer comprises a first lower negative electrode active material layer in contact with the negative electrode current collector layer and a first upper negative electrode active material layer provided on a surface of the first lower negative electrode active material layer opposite to a surface in contact with the negative electrode current collector layer,
   the second negative electrode active material layer comprises a second lower negative electrode active material layer in contact with the negative electrode current collector layer and a second upper negative electrode active material layer provided on a surface of the second lower negative electrode active material layer opposite to a surface in contact with the negative electrode current collector layer,
   one of the first lower negative electrode active material layer and the first upper negative electrode active material layer comprises a silicon-based active material,
   the first lower negative electrode active material layer and the second upper negative electrode active material layer have the same composition, and
   the first upper negative electrode active material layer and the second lower negative electrode active material layer have the same composition.

2. The negative electrode for a lithium secondary battery of claim 1, wherein the first negative electrode active material layer and the second negative electrode active material layer are asymmetrical relative to each other with respect to the negative electrode current collector layer.

3. The negative electrode for a lithium secondary battery of claim 1, wherein

   the first lower negative electrode active material layer and the second lower negative electrode active material layer have different compositions, and
   the first upper negative electrode active material layer and the second upper negative electrode active material layer have different compositions.

4. The negative electrode for a lithium secondary battery of claim 1, wherein

   the first lower negative electrode active material layer comprises a first lower negative electrode active material layer composition,
   the first upper negative electrode active material layer comprises a first upper negative electrode active material layer composition,

the first lower negative electrode active material layer composition comprises a first lower negative electrode active material, a first lower negative electrode conductive material, and a first lower negative electrode binder, and

the first upper negative electrode active material layer composition comprises a first upper negative electrode active material, a first upper negative electrode conductive material, and a first upper negative electrode binder.

5. The negative electrode for a lithium secondary battery of claim 4, wherein

one of the first lower negative electrode active material and the first upper negative electrode active material comprises one or more selected from the group consisting of a carbon-based active material, a silicon-based active material, a metal-based active material capable of alloying with lithium, and a lithium-containing nitride, and the other of the first lower negative electrode active material and the first upper negative electrode active material comprises a carbon-based active material.

6. The negative electrode for a lithium secondary battery of claim 5, wherein the silicon-based active material comprises $SiO_x$ (x=0), $SiO_x$ (0 < x < 2), or SiC.

7. The negative electrode for a lithium secondary battery of claim 5, wherein the silicon-based active material is included in an amount of 1 part by weight or more and 50 parts by weight or less, based on 100 parts by weight of the first lower negative electrode active material.

8. The negative electrode for a lithium secondary battery of claim 1, wherein

a thickness of the first negative electrode active material layer is 10 $\mu$m or greater and 200 $\mu$m or less, and a thickness of the second negative electrode active material layer is 10 $\mu$m or greater and 200 $\mu$m or less.

9. The negative electrode for a lithium secondary battery of claim 4, wherein the first lower negative electrode conductive material and the first upper negative electrode conductive material comprise at least a linear conductive material.

10. A lithium secondary battery comprising:

a positive electrode;
the negative electrode for a lithium secondary battery of any one of claims 1 to 9;
a separator provided between the positive electrode and the negative electrode; and
an electrolyte.

11. A method for manufacturing a negative electrode for a lithium secondary battery, the method comprising:

preparing a first negative electrode slurry and a second negative electrode slurry;
applying the first negative electrode slurry on one surface of a negative electrode current collector layer, and applying the second negative electrode slurry on the first negative electrode slurry applied on one surface of the negative electrode current collector layer; and
applying the second negative electrode slurry onto an opposite surface of the negative electrode current collector layer, and applying the first negative electrode slurry onto the second negative electrode slurry applied on the opposite surface of the negative electrode current collector layer,
wherein one of the first negative electrode slurry and the second negative electrode slurry comprises a silicon-based active material.

12. The method of claim 11, wherein the applying a first negative electrode slurry onto one surface of the negative electrode current collector layer and applying a second negative electrode slurry onto the first negative electrode slurry applied on one surface of the negative electrode current collector layer comprises simultaneously applying a second negative electrode slurry onto the first negative electrode slurry in an undried state after applying the first negative electrode slurry.

[Figure 1]

| 10-2 |
|:---:|
| 10-1 |
| 20 |
| 30-1 |
| 30-2 |

} 100

## INTERNATIONAL SEARCH REPORT

| International application No. |
| --- |
| **PCT/KR2024/015715** |

| A. | CLASSIFICATION OF SUBJECT MATTER |
| --- | --- |

**H01M 4/583**(2010.01)i; **H01M 4/36**(2006.01)i; **H01M 4/48**(2010.01)i; **H01M 4/133**(2010.01)i; **H01M 10/0525**(2010.01)i; **H01M 4/1393**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/583(2010.01); H01M 10/04(2006.01); H01M 10/0525(2010.01); H01M 4/13(2010.01); H01M 4/139(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 음극 집전체(anode current collector), 음극 활물질층(anode active material layer), 다층(multilayer), 조성(composition), 비대칭(asymmetry)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2019-089696 A2 (MAXWELL TECHNOLOGIES, INC.) 09 May 2019 (2019-05-09) See claims 1-4, 8, 11, 14, 16, 26, 27 and 29; paragraphs [0016], [0044]-[0046], [0054], [0060], [0073]-[0075], [0081] and [0100]; and figure 3A. | 1-10 |
| Y | | 11,12 |
| Y | KR 10-2017-0031439 A (LG CHEM, LTD.) 21 March 2017 (2017-03-21) See claim 1; and paragraphs [0090]-[0093]. | 11,12 |
| A | KR 10-2023-0010172 A (LG ENERGY SOLUTION, LTD.) 18 January 2023 (2023-01-18) See claims 1-16. | 1-12 |
| A | KR 10-2021-0017619 A (SK INNOVATION CO., LTD.) 17 February 2021 (2021-02-17) See claims 1-17; and figure 1. | 1-12 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 February 2025** | **11 February 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/015715** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2012-0124077 A (LG CHEM, LTD.) 12 November 2012 (2012-11-12) See abstract; and claims 1-24. | 1-12 |

Form PCT/ISA/210 (second sheet) (July 2022)

## INTERNATIONAL SEARCH REPORT
### Information on patent family members

International application No.

**PCT/KR2024/015715**

| Patent document cited in search report | | | Publication date (day/month/year) | Patent family member(s) | | | Publication date (day/month/year) |
|---|---|---|---|---|---|---|---|
| WO | 2019-089696 | A2 | 09 May 2019 | CN | 111095645 | A | 01 May 2020 |
| | | | | EP | 3704756 | A2 | 09 September 2020 |
| | | | | JP | 2021-501961 | A | 21 January 2021 |
| | | | | JP | 2023-171777 | A | 05 December 2023 |
| | | | | JP | 7461877 | B2 | 04 April 2024 |
| | | | | KR | 10-2020-0083439 | A | 08 July 2020 |
| | | | | US | 11990278 | B2 | 21 May 2024 |
| | | | | US | 2019-0139714 | A1 | 09 May 2019 |
| | | | | US | 2024-0258043 | A1 | 01 August 2024 |
| | | | | WO | 2019-089696 | A3 | 18 July 2019 |
| KR | 10-2017-0031439 | A | 21 March 2017 | KR | 10-2005779 | B1 | 01 August 2019 |
| KR | 10-2023-0010172 | A | 18 January 2023 | CA | 3210743 | A1 | 12 January 2023 |
| | | | | EP | 4287320 | A1 | 06 December 2023 |
| | | | | EP | 4287320 | A4 | 30 October 2024 |
| | | | | JP | 2024-505728 | A | 07 February 2024 |
| | | | | KR | 10-2698874 | B1 | 27 August 2024 |
| | | | | US | 2023-0016746 | A1 | 19 January 2023 |
| | | | | WO | 2023-282684 | A1 | 12 January 2023 |
| KR | 10-2021-0017619 | A | 17 February 2021 | | None | | |
| KR | 10-2012-0124077 | A | 12 November 2012 | CN | 103201882 | A | 10 July 2013 |
| | | | | CN | 103201882 | B | 03 November 2017 |
| | | | | KR | 10-1407085 | B1 | 19 June 2014 |
| | | | | US | 2013-0224584 | A1 | 29 August 2013 |
| | | | | US | 9543568 | B2 | 10 January 2017 |
| | | | | WO | 2012-150813 | A2 | 08 November 2012 |
| | | | | WO | 2012-150813 | A3 | 17 January 2013 |

Form PCT/ISA/210 (patent family annex) (July 2022)

**EP 4 730 436 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230158202
- JP 2009080971 A